# EUROPEAN PATENT APPLICATION

(11) **EP 1 276 306 A2**
(43) Date of publication of application: **15.01.2003**
(21) Application number: 02254860.6
(22) Date of filing: 10.07.2002
(51) Int. Cl.: H04M 15/00, H04Q 7/00

(54) **A method and apparatus for routing telecommunications traffic**

(30) Priority: 10.07.2001 GB 0116831
(71) Applicant: telecomFM Developments Ltd, Sough, Berkshire SL1 4LP (GB)
(72) Inventor: Beatty, Trevor William, Maidenhead, Berkshire SL6 1TD (GB)
(74) Representative: Frost, Alex John

(57) **Abstract**

There is provided a method and apparatus for routing telecommunications traffic between a source telecommunications device (14) and a receiver telecommunications device. To enable this to occur there is provided a wired output interface (6) adapted for coupling to a fixed line telecommunications network, a wireless output interface (26) adapted for coupling to mobile line telecommunications network, an input interface (8) adapted for coupling to a first telecommunications device, and routing means (24) in communication with each of the wired output interface (6), the wireless output interface (26) and the input interface, where the routing means (24) is arranged to route the telecommunications traffic which arrives via the input interface (8)from the source telecommunications device (14) to the receiver telecommunications device, the routing means (24) switching the telecommunications traffic via one of the fixed land telecommunications network and the mobile line telecommunications network in accordance with a predefined criterion.

## Description

### FIELD OF THE INVENTION.

This invention relates to a method and apparatus for the routing of telecommunications traffic between fixed line telecommunications service networks and mobile telecommunications service networks.

### BACKGROUND TO THE INVENTION.

With many more people relying on mobile telephones to conduct everyday business, the number of calls made to mobile telephones has increased dramatically. This has particularly been the case in the business arena.

Calls to mobile telephones now make up a large number of the total number of calls made. The pricing structure of many mobile telephone service providers means that the cost of a call to a mobile telephone made from another mobile telephone that uses the same mobile telephone service provider tends to be much cheaper than a call to that mobile telephone from a land-line. However, this pricing structure also means that the cost of a call from the same mobile telephone to a land-line telephone is large. Therefore a company would not be willing to switch many of its employees onto a mobile network as this is also uneconomical.

It is an object of the present invention to address these problems.

### SUMMARY OF THE INVENTION.

According to one aspect of the present invention there is provided an apparatus for routing telecommunications traffic between a source telecommunications device and a receiver telecommunications device, the apparatus comprising a wired output interface adapted for coupling to a fixed line telecommunications network, a wireless output interface adapted for coupling to a mobile line telecommunications network, an input interface adapted for coupling to said first telecommunications device; and routing means in communication with each of said wired output interface, said wireless output interface and said input interface, said routing means being arranged to route the telecommunications traffic which arrives via said input interface from said source telecommunications device to the said receiver telecommunications device, the routing means switching the telecommunications traffic via one of said fixed line telecommunications network and said mobile line telecommunications network in accordance with a predefined criterion.

The apparatus of the present invention allows a user to be routed between a fixed line service provider and a mobile line service provider depending upon a specified criterion such as, for example, which routing will result in the cheapest telephone call. The user does not have to choose when the call should be routed via a mobile line service provider. This intelligent routing may thus use a mobile line network when appropriate to reduce the cost of telephone calls.

Preferably the apparatus may further comprise a storage means in communication with said routing means, the storage means being arranged to store at least a part of a plurality of telephone numbers, and to provide a look up table indicating the routing criterion associated with a corresponding stored telephone number.

It is also preferred that the apparatus of the present invention may route said telecommunications traffic in a defined time period between consecutively received telephone number digits sent from the said source telecommunications device.

In a further embodiment the apparatus of the present invention may also comprise a reception strength meter to determine the reception strength of each of said plurality of said wireless interface means. This is to help a user install the apparatus of the present invention.

In a further aspect of the present invention there is provided a system for routing telecommunications traffic between a first telecommunications device and a second telecommunications device using either a fixed line telecommunications network or a mobile line telecommunications network, comprising the routing apparatus of the present invention coupled to said first telecommunications device.

In this case, preferably, the system may further comprise at least one fixed line network and a mobile line network coupled to the apparatus of the present invention.

In still a further aspect of the present invention, there is provided a method for routing telecommunications traffic between a source telecommunications device and a receiver telecommunications device via a routing means, the method comprising the steps of coupling a wired output interface of the routing means to a fixed line telecommunications network, coupling a wireless output interface of the routing means to a mobile line telecommunications network, coupling an input interface of the routing means to said first telecommunications device, and routing telecommunications traffic which arrives at the routing means via said input interface from said source telecommunications device to the said receiver telecommunications device via one of said fixed line telecommunications network and said mobile line telecommunications network in accordance with a predefined criterion.

Further advantageous features of the invention are set out in the dependent claims appended thereto.

### BRIEF DESCRIPTION OF DRAWINGS.

One embodiment of the invention will now be described by way of example only and with reference to the drawings in which;
Figure 1 shows a block diagram of a system for routing telecommunications traffic which embodies the present invention and which has a routing apparatus and a first and second telecommunication device;
Figure 2 shows a block diagram of the routing apparatus of figure 1;
Figure 3 shows a block diagram of a first part of the routing apparatus of figure 2 in more detail;
Figure 4 shows a block diagram of a second part of the routing apparatus of figure 2 in more detail;
Figure 5 shows a block diagram of a third part of the routing apparatus of figure 2 in more detail;
Figure 6 shows a block diagram of a fourth part of the routing apparatus of figure 2 in more detail.

### DESCRIPTION OF A PREFERRED EMBODIMENT OF THE PRESENT INVENTION.

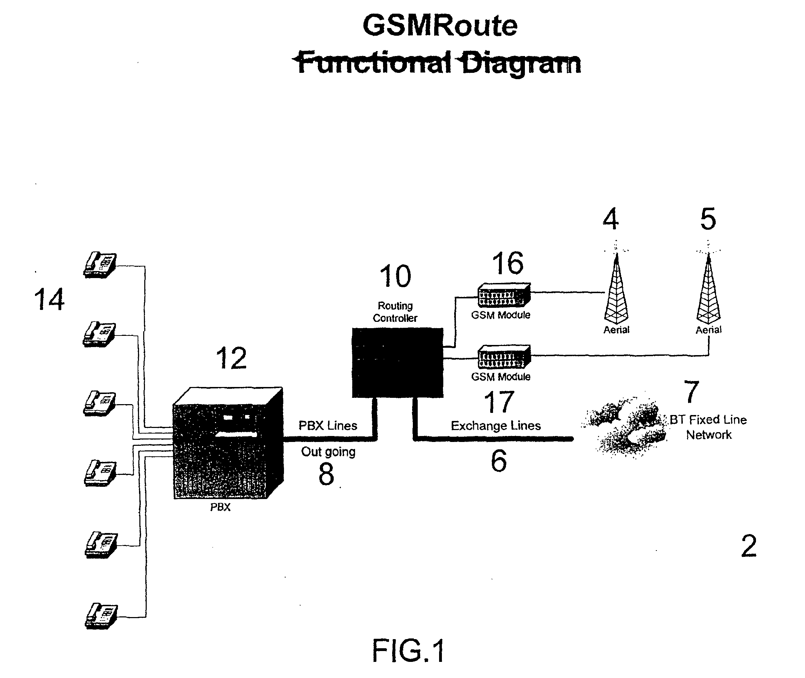

Figure 1 illustrates a routing controller 10 connected to a telephone system 2. As is seen in figure 1, the routing controller 10 is connected in parallel between a Public Branch exchange (PBX) 12 and a fixed line network 7. In the United Kingdom, this fixed line network is currently run by British Telecommunications PLC. In particular, the routing controller 10 is connected to the PBX 12 by the PBX lines 8 and to the fixed line network 7 by the exchange lines 6. Although only one PBX line 8 is shown in figure 1, the following description assumes six PBX lines 8 are present. Of course, there may be more or less PBX lines than this.

Also connected to the PBX 12 are, in this case, six telephone extensions 14. It is understood that there may be more or less telephone extensions 14 than this. Each telephone extension 14 has the ability to dial a telephone that is not within the PBX 12 network, that is, to "dial out" of the PBX network 7. Additionally, each telephone extension 14 may use the PBX 12 to contact another telephone extension 14 within the PBX 12 network. It is the ability of each telephone extension 14 to "dial out" of the PBX 12 network to which this invention relates.

Also coupled to the routing controller 10 are a first and second Global System for Mobile communication (GSM) module 16 and 17, respectively. Each of the GSM modules 16 and 17 allow the routing controller 10 to access mobile line service providers as will be explained in detail hereinafter. The first and second GSM modules 16 and 17 send all mobile line network messaging on outbound, inbound, voice and data calls to the routing apparatus 10. The first and second GSM modules 16 and 17 also provide information on locating, negotiating and logging onto the nearest GSM base-station. As the first and second GSM modules are well known in the art, they will not in themselves be explained any further.

Connected to the GSM modules 16 and 17 are two aerials 4 and 5. These two aerials 4 and 5 allow the GSM modules 16 and 17 respectively to transmit and receive signals to and from the mobile line service provider's base station (not shown). The way in which communication between the GSM modules 16 and the mobile line service provider's base station is well known and will not be described any further.

It should be noted however that the aerials 4 and 5 may transmit at a microwave frequency (around 1800 MHz). This means that the location of the aerials 4 and 5 is of significance. This is because the signals may be severely attenuated by water and can affect the operation of other electronic devices. This is particularly the case with electronic office equipment.

For this reason, a signal strength meter is provided and this is coupled to the routing apparatus 10. The signal strength meter measures the signal received from the mobile line service provider's base station (not shown). This strength meter will measure the strength of the received signal and provide to a user either visually or audibly, an indication of the received signal strength. This allows the user to choose the best location for the aerials 4 and 5. This signal strength meter is known and may be coupled to the GSM modules 16 and 17.

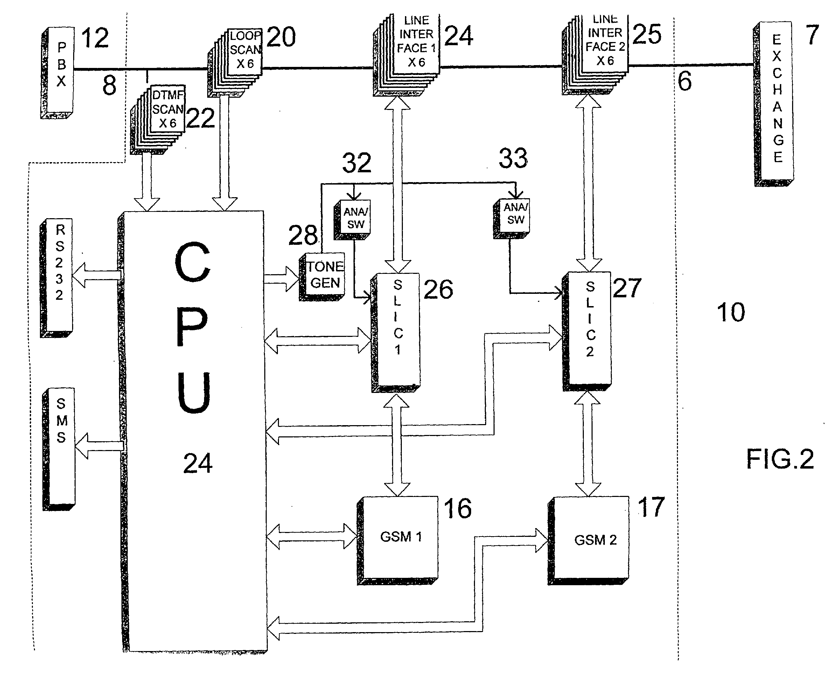

The construction and operation of the routing controller 10 is explained in further detail with reference to figure 2. The routing controller 10 is shown by the broken lines. The routing controller 10 includes six Dual Tone Multi Frequency (DTMF) scanners 22, six loop scanners 20, six first line interface circuits 24 and six second line interface circuits 25. Although there are six of each of the above described, the skilled person will understand that there may be more or less than this depending on the number of fixed exchange lines 6 required by the PBX 12.

Referring still to figure 2, the PBX lines 8 are connected in parallel to the six DTMF scanners 22 and to the loop scanners 20; more specifically, each of the six PBX lines 8 are connected to a separate DTMF scanner 22 and loop scanner 20. Connected to each individual loop scanner 20 is one of the six first line interface circuits 24. A processing unit 24 is also connected to the six DTMF scanners 22 and the six loop scanners 20.

The function of each loop scanner 20 is to monitor each of the six PBX lines 8 and each of the exchange lines 6 for, specifically, on-hook, off-hook, time break recall, earth start, pulse dialling and ringing in. Once the particular PBX line 8 or exchange line 6 has been looped, the particular DTMF scanner 22 monitors the relevant line for DTMF tones. This is explained in detail hereinafter.

As mentioned previously, each first line interface circuit 24 is connected to each loop scanner 20. Additionally connected to each of the respective six line interface circuits 24 is one of the six second line interface circuits 25. Each of the six second line interface circuits 25 is connected to one of the six exchange lines 6. The function of each of the first and second line interface circuits 24 and 25 is to place each exchange line 6 into a "busy" state.

This means that when a PBX line 8 is in use, a corresponding exchange line 6 is put into a "busy" state which stops incoming calls from the fixed line network 7 being connected to the PBX line 8 that is already in use. The construction and function of each of the first line interface circuits 24 is identical to each of the second line interface circuits 25.

Further connected to the six first line interface circuits 24 is a first subscriber line interface circuit (SLIC) 26. The first SLIC 26 is also connected to the processing unit 24 and to the first GSM module 16. The first GSM module 16 is also connected to the processing unit 24. Further connected to the first SLIC 26 is a first analogue switch 32.

As will be seen from figure 2, there is a second SLIC 27 connected to the six second line interface circuits 25. The second SLIC 27 is also connected to the processing unit 24 and the second GSM module 17. The second GSM module 17 is also connected to the processing unit 24. Further connected to the second SLIC 27 is a second analogue switch 33. The function of the second SLIC 27, the second GSM module 17 and the second analogue switch 33 is the same as the first SLIC 26, the first GSM module 16 and the first analogue switch 32, respectively. For clarity therefore only the function and interaction of the first SLIC 26, the first GSM module 16 and the first analogue switch 32 will be described. The skilled person will appreciate that, although in figure 2, only two GSM modules and the associated circuitry are described, there may be more or less than this. It will also be apparent that there will be the same number of line interfaces, SLICS and analogue switches as there are GSM modules, which may be more or less than the two described.

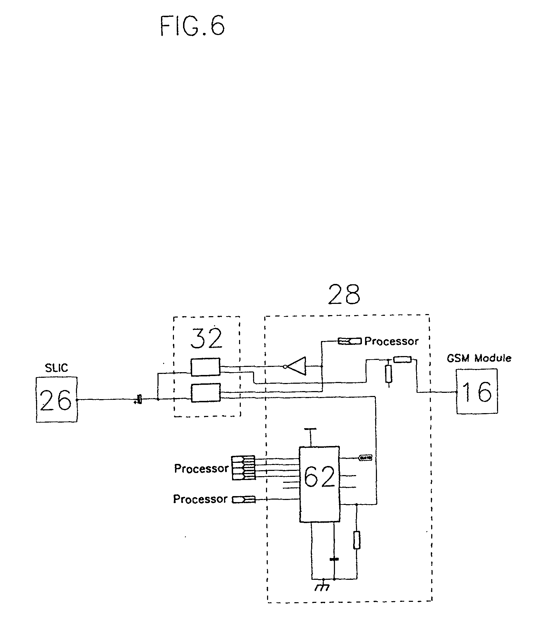

A tone generator 28 is also connected to the first analogue switch 32 and the second analogue switch 33. It should be noted that the tone generator 28 may be connected to any number of analogue switches. The tone generator is further connected to the processing unit 24. The function and construction of the tone generator 28 will be described in connection with figure 6 below.

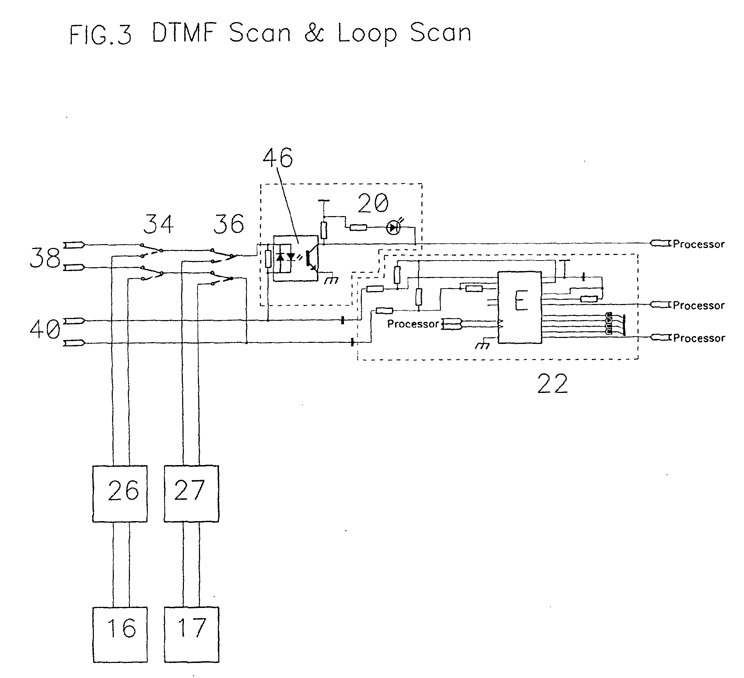

Now referring to figure 3, a block diagram of one of the DTMF scanners 22 and one of the loop scanners 20 is illustrated. One of the PBX lines 8 is connected to a PBX interface 40. An exchange interface 38 is connected to one of the exchange lines 6 and a first GSM relay 34. Connected to the first GSM relay 34 is the first SLIC 26 and a second GSM relay 36. In this description, the first GSM relay 34 and the second GSM relay 36 are mechanical relays although any other suitable relay may be used. Connected to the first SLIC 26 is the first GSM module 16. Connected to the second SLIC 27 is the second GSM relay 36 and the second GSM module 17. A line opto-coupler 46 is further connected to the second GSM relay 36; the line opto-coupler 46 is part of the loop scanner 20 that is represented by the dashed lines. Further connected to the second GSM relay 36, in parallel to the loop scanner 20, is the DTMF scanner 22 that is represented by dashed lines. The processing unit 24 is connected to the loop scanner 20 and the DTMF scanner 22.

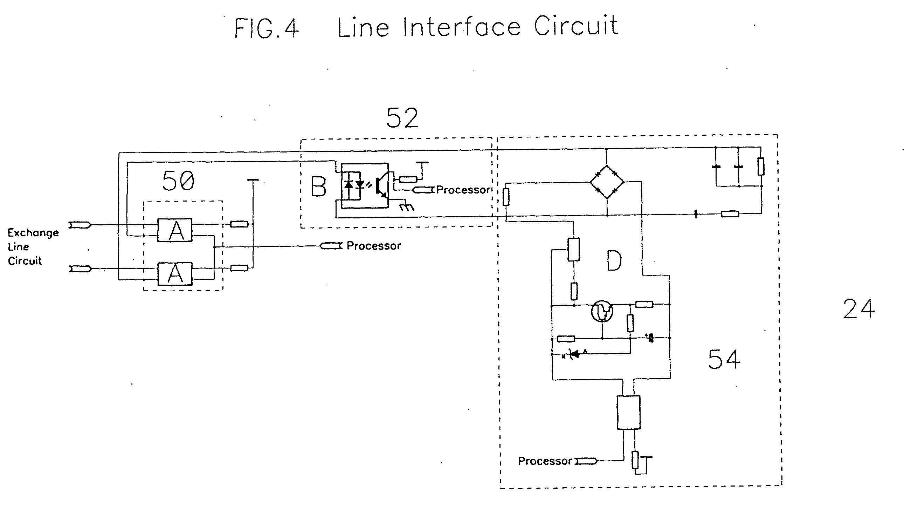

Referring next to figure 4, a block diagram of one of the first line interface circuits 24 is illustrated. One of the exchange lines 6 is coupled to one of the first line interface circuits 24 and fed into an exchange relay 50. In this description the exchange relay 50 is a solid state relay although any other suitable relays could be used. An exchange loop detecting circuit 52 is coupled to the exchange relay 50 and to a line looping circuit 54. The line looping circuit 54 is also coupled to the processing unit 24. The purpose of the line looping circuit 54 is to place the exchange line 6 in a "busy state", as is known in the art. It is understood that a known gyrator circuit is one suitable arrangement for the line looping circuit 54, although other arrangements may be used.

The function of one of the DTMF scanners 22 and the loop scanner 20 will now be described with reference to figure 2. As mentioned previously, one the functions of one the loop scanners 20 is to monitor one of the PBX lines 6 for, specifically, off-hook, on-hook, time break recall, earth start and pulse dialling.

A user may request that the PBX unit 12 seize an exchange line 6 when the user wishes to dial out of the PBX network 2. When this happens the line opto-coupler 46 sends a signal to the processing unit 24 informing the processing unit 24 that a user wishes to seize an exchange line 6. Once the processing unit 24 receives this indication, the processing unit 24 starts scanning the PBX line 8 for DTMF signals using the DTMF scanner 22.

Stored within the processing unit 24 are a series of predefined routing numbers. These numbers are stored along with corresponding routing instructions. The section of a telephone number that defines the service provider of the requested telephone that would be dialled by a user may be stored along with the details of the particular service provider. So for example, in the United Kingdom the prefix 07760 defines a Vodafone Service Provider and the prefix 07941 defines a Virgin Mobile Service Provider etc. These lists of service providers may be stored in conjunction with the corresponding prefixes and the instructions for routing the outgoing call using the particular service provider. Alternatively however, the processing unit 24 may just store the prefixes and the corresponding routing instructions. Preferably, the processing unit 24 stores only the prefixes that require the routing apparatus 10 to route the particular telephone call via an alternative service provider. In other words, the routing apparatus 10 normally routes the calls via the fixed line network 7 but occasionally routes a call via a mobile line service provider when a user wishes to communicate with a mobile telephone using a predefined mobile service provider. This reduces the amount of information that has to be stored by the processing unit 24. Furthermore, the routing information may be stored elsewhere in the routing apparatus 10 and the routing information may be updated at any time using a remote link, for example, the Internet. The routing information may be stored according to a particular criterion, for example, to route the call using the cheapest mobile service provider or with regard to the largest available bandwidth.

As the DTMF signals are received by the DTMF scanner 22, they are temporarily stored in the processing unit 24 and compared with the stored prefix. The received DTMF digits may be compared with all of the stored prefixes or only a selected number. Also the processing unit 24 may wait until a predefined number of digits have been detected and stored before comparing the stored received digits with the stored prefixes. It should be noted that the predefined number of digits is less than would be required by the fixed line network 7 to successfully route the outgoing call.

This may be advantageous as it requires a fewer number of memory accesses compared with accessing the memory after every digit is received, and so may be quicker. If the digits received are identical to a stored prefix and therefore require the routing apparatus 10 to route the telephone call via the mobile line service provider the processing unit 24 will send an instructing signal to the DTMF scanner 22 and the loop scanner 20 that the PBX line 8 is to be switched to the mobile line service provider, in this case via one of the two described GSM modules 16 or 17. It should be noted that the each GSM module 16 or 17 may use the same or different mobile line service providers.

The timing of the switch between the fixed line service provider 7 and the mobile line service provider should take place at a carefully specified time. If the switch takes place either too late or too early then the routing apparatus 10 may miss a DTMF tone supplied by the user and misdial the required number.

Between each DTMF tone, there is a 50mS gap where no tone is generated. It is preferable that the switch between the fixed line service provider and the mobile line service provider takes place during this 50mS gap. If the switch was to take place at any other time, there is a high probability that the DTMF scanner 22 will halt any DTMF detection on the line because the noise spikes produced by switching the service providers would be too large. This increases the likelihood of the DTMF scanner 22 missing a DTMF digit.

By switching between service providers during the 50mS gap, the DTMF scanner 22 and the PBX 12 would have time to settle down before the next DTMF tone would be received by the DTMF scanner 22 and so therefore reduce the chance of noise spikes corrupting the DTMF tones. This reduces the possibility of the DTMF scanner 22 halting DTMF detection and therefore in turn reduces the possibility of the DTMF scanner 22 missing a DTMF digit.

It should be noted also that by switching between the fixed line service provider 7 and the mobile line service provider immediately after the predefined number of digits have been received by the DTMF scanner 22, the fixed line service provider 7 will not have received enough DTMF digits to be able to route the call. In other words, the fixed line service provider 7 only receives a fraction of the DTMF digits required to successfully route the call via the fixed line network. Therefore, the fixed line network 7 is not able to route the call using the fixed line service provider 7. The call is only routed by the mobile line service provider.

After switching between the fixed line service provider 7 and the mobile line service provider has taken place, the DTMF scanner 22 continues to receive the DTMF digits from the PBX 12. These DTMF digits will continue to be stored in the processing unit 24. After the PBX 12 has provided sufficient digits to successfully route the call using the mobile line service provider, these digits (including the routing digits) are forwarded by the processing unit 24 to the mobile line service provider. This allows the mobile service provider to route the call accordingly.

Now referring back to figure 3, it may be seen that the first GSM relay 34 is in a first position and that the second GSM relay 36 is also in that first position. This is the "idle state" position. This is the position that the first and second GSM relay 34 and 36 returns to after every call. This is advantageous because, if the routing apparatus 10 were to fail, the PBX 12 would still be connected to the fixed line network 7. Both the first and second GSM relays 34 and 36 are capable of moving into a second position indicated by the dashed lines when these relays receive instructions from the processing unit 24. If either the first or second GSM relay 34 or 36 moves into the second position, the PBX interface 40 may be connected directly to one of either the first GSM module 16 or the second GSM module 17, depending on whether the first GSM relay 34 or the second GSM relay 36 moves into the second position respectively. If for example the first GSM relay 34 moves into the second position, then the PBX line 8 shown in figure 3 is connected to the first GSM module 16. This allows the user who seized the particular line to route the telephone call through the mobile line service provider in accordance with one of the routing criteria, one advantage of which may be the reduced phone tariff.

Now referring to figure 4, as was noted previously, one of the exchange lines 6 is coupled to the exchange relay 50. The exchange relay 50 is controlled by the processing unit 24.

It is important to note here, that when a PBX line 8 is routed via the mobile line service provider as mentioned above, the exchange line 6 to which the PBX line 8 would have normally been routed is left in an open state. In other words, the exchange line 6 is viewed by the fixed line network as still being free to use. This means that an incoming call may be routed to the exchange line 6 by the fixed line service provider 7 even though the corresponding PBX line 6 is busy routing a call through the mobile line network service provider. This may cause problems in the network. It is desirable therefore to make the fixed line service provider believe that the exchange line 6 is in use. This may be achieved in several ways as will be appreciated by a skilled person, one of which is described now.

As the processing unit 24 is routing the call through the mobile line service provider as explained above, the processing unit 24 sends a signal to the first or second line interface unit 24 or 25; in particular, the exchange relay 50 receives the signal from the processing unit 24 and switches the exchange line 6 onto the line looping circuit 54.

More specifically, when a call is directed using the fixed line network provider 7 the exchange line 6 is routed by the exchange relay 50 to the exchange loop detecting circuit 52. In a similar manner to the loop scanner 46, the exchange loop detecting circuit 52 monitors the exchange line 6. In particular, the loop detecting circuit 52 monitors line current on the exchange line 6. The purpose of monitoring line current is to allow the loop detecting circuit 52 to monitor the status of the exchange line 6, for example if the exchange line 6 is broken or the exchange line 6 is disconnected. The exchange loop detecting circuit 52 feeds information regarding the status of the exchange line 6 back to the processing unit 24. Therefore if the exchange line 6 is not functioning or has been disconnected, management reports may be generated by the processing unit 24, notifying the fixed line network 7 of the problem. This facilitates quick notification to the fixed line network 7, so causing minimal disruption to the user.

However when a call is directed using the mobile line network, the exchange line relay 50 switches the exchange line 6, upon instruction from the processing unit 24, so that the exchange line 6 is fed to the exchange line looping circuit 54. The exchange line looping circuit 54 is arranged to make the exchange line 6 appear to be in use to the fixed line network provider 7. This stops the fixed line network provider 7 from routing an incoming call to a PBX line 6 that is already routed to the mobile line service provider.

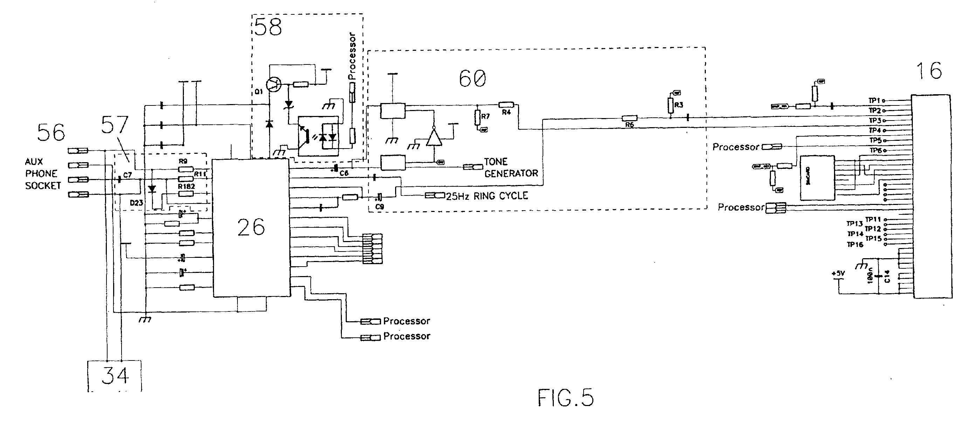

Figure 5 illustrates a block diagram of, in this case, the first SLIC 26. As the first SLIC 26 has the same construction and function as the second SLIC 27, only the first SLIC 26 shall be described in detail hereinafter.

The function of the first SLIC 26 is to sit as a gateway between the PBX 12 and, in this case, the first GSM module 16. The first SLIC 26 provides network specific functions, line current, line reversal, earth start, loop detect and ringing generation. Each of these features are known in the art and will not therefore be described in any detail hereinafter.

The PBX lines 6 are fed into the first GSM relay 34. The first GSM relay 34 is further connected to an auxiliary telephone extension 56. The purpose of the auxiliary telephone extension 56 is to allow a user to attach a telephone extension (not shown) directly to the first GSM module 16 and so the telephone extension (not shown) may be used to directly route calls over the GSM network. This may be for the purposes of testing the GSM network. The auxiliary telephone extension 56 is connected to a SLIC line presentation circuit 57. The SLIC line presentation circuit 57 is represented by the dashed lines and is connected to the first SLIC 26. The SLIC line presentation circuit 57 comprises a SLIC biassing capacitor C7 connected to the first SLIC 26, a first SLIC biassing resistor R9 connected between the PBX line 8 and the first SLIC 26, a second SLIC biassing resistor R11 connected between the first SLIC 26 and the SLIC biassing capacitor C7, a third SLIC biassing resistor R182 connected between the first SLIC 26 and the anode of a SLIC biassing diode D23. The cathode of the SLIC biassing diode D23 is connected to the PBX line 6. The function of the SLIC biassing circuit 57 is to limit the current flow between the PBX line 6 and the first SLIC 26. In particular, the combination of the first SLIC biassing resistor R9 and the second SLIC biassing resistor R11 is to limit any fault current flowing to the first SLIC 26 that may be generated should a fault occur. The SLIC biassing diode D23 and the third SLIC biassing resistor R182 are arranged to facilitate fault finding as will be appreciated by a skilled person. Additionally the SLIC biassing circuit 57 provides the correct line impedance to be seen by the PBX line 6. This is also to comply with installation regulations. The first SLIC 26 also provides the PBX 12 with a 50 Volt output voltage. This is advantageous because the PBX 12 requires a 50 Volt output to signify the presence of a fault free exchange line 6. A lower voltage may in fact be seen by the PBX 12 as being a fault and so the PBX 12 will act accordingly.

Coupled to the first SLIC 26 is a ringing SLIC circuit 58 that is represented by the dashed lines. The ringing SLIC circuit 58 is the control input for the first SLIC 26 when used for ringing a PBX line 8. This will occur when, in this case, the first GSM module 16 receives an incoming call. This will be explained hereinafter.

If the processing unit 24 requires that a call be routed from, in this case, the first GSM module 16 to a PBX line 8, the ringing SLIC circuit 58 allows the 75 Volt ringing signal to be routed to the PBX 12. If, however, there is no incoming call to be routed to the PBX 12, the ringing SLIC circuit 58 provides the 50 Volt output voltage as described previously.

Attached to the ringing current SLIC circuit 58 is a GSM transmission path 60. This is represented by the dashed lines. The purpose of the GSM transmission path 60 is to link the first SLIC 26 with the, in this case, first GSM module 16. Therefore, the GSM transmission path is also connected to the first GSM module 16. The GSM transmission path 60 couples only the alternating current signals between the first SLIC 26 and the first GSM module 16. Additionally, the signals received from the GSM module 16 may be attenuated by the first SLIC 26 to be within certain limits. This attenuation may also take place in the GSM transmission path 60. There are many ways of achieving this which are known to a skilled person and so will not be discussed any further hereinafter.

Figure 6 illustrates a block diagram of the tone generator 28. As is shown in figure 6, the tone generator 28 (represented by dashed lines) is connected to, in this case, the first analogue switch 32. There may be more or less analogue switches connected to the tone generator 28 depending on the number of GSM modules present in the routing apparatus 10. For example, in figure 2 there is shown a second analogue switch 33. As the construction and function of the second analogue switch 33 is the same as the first analogue switch 32, only the first analogue switch 32 will be described. The first analogue switch 32 is also connected to the processing unit 24. The tone generator 28 is connected to the first and second GSM module 16 and 17 and also the tone generator 28 is connected to the PBX lines 8 that are switched to the first SLIC 27 upon routing of a call via the, (in this case), first SLIC 27. In other words, as a PBX line 8 is used for routing either an incoming or outgoing call via the, in this case, first SLIC 27, the tone generator 28 is connected to the PBX lines 8 that are routed via the first SLIC 27.

The tone generator 28 is used to give audible feedback to a user, to indicate the progress of the call. For example, the feedback may be a busy tone, an engaged tone, a network busy tone, a ring tone or dial tone or the like. The tone generator 28 also allows the injection of confidence tones into a voice channel out to the PBX 12. The confidence tones may be used for instance to inform the user that a call is being routed via the first GSM module 17 in accordance with the specified criteria. The first and second analogue switches 32 and 33 respectively switch the tones generated by the tone generator 28 between the first GSM module 16 and the second GSM module 17 under the instruction of the processing unit 24. The tone generator 28 in this example is switched to the PBX line 8 after the PBX 12 has dialled all the DTMF digits. Also the processing unit 24 controls the generation of such tones by the tone generator 28.

The first GSM module 16 and the second GSM module 17 are capable of receiving incoming calls. This is more attractive to a user who may be wishing to call a telephone extension attached to the PBX 12 from a mobile telephone due to the pricing tariffs as noted previously. The incoming call arrives at either the first GSM module 16 or the second GSM module 17. In the following example, it is assumed that the call arrives at the first GSM module 16 for ease of explanation.

The first GSM module 16 notifies the processing unit 24 of the presence of the incoming call. The processing unit 24 instructs the first GSM relay 34 to route the incoming call via one of the PBX lines 8. The exchange line 6 that would normally route the in use PBX line 8 is parked in a busy state using the line looping circuit 54. The, in this case, first SLIC 26 then instructs the ringing SLIC circuit 58 to send a ringing signal, which is typically 75 Volts AC to the PBX 12.

After the user has answered the incoming call, the first SLIC 26 instructs the ringing SLIC circuit 58 to stop the ringing signal and to change the output voltage to, in this case, 50 Volts DC The incoming caller is then connected to the PBX 12 in a known manner.

The foregoing has described a presently preferred embodiment for the connection of two telephones. It is of course to be understood that computer MOdulator DEModulatorS (MODEMS), facsimile machines and the like may equally use the routing controller 10 described above. Although connection from a PBX has been described, it is to be understood that this system may also be used with a single private telephone line or indeed a mobile telephone.

Additionally, although DTMF tones have been used in this description, the present invention may also be used with equipment utilising pulse dialling or the like.

Finally, although a single fixed line service has been described, the present invention is not so limited.

## Claims

1. Apparatus for routing telecommunications traffic between a source telecommunications device and a receiver telecommunications device, the apparatus comprising:
a wired output interface adapted for coupling to a fixed line telecommunications network;
a wireless output interface adapted for coupling to a mobile line telecommunications network;
an input interface adapted for coupling to said first telecommunications device; and
routing means in communication with each of said wired output interface, said wireless output interface and said input interface, said routing means being arranged to route the telecommunications traffic which arrives via said input interface from said source telecommunications device to the said receiver telecommunications device, the routing means switching the telecommunications traffic via one of said fixed line telecommunications network and said mobile line telecommunications network in accordance with a predefined criterion.

2. Apparatus as claimed in claim 1, wherein said receiver telecommunications device has a unique telephone number to allow the source telecommunications device to communicate therewith.

3. Apparatus as claimed in claim 1 further comprising a storage means in communication with to said routing means, the storage means being arranged to store at least a part of a plurality of telephone numbers, and to provide a look up table indicating the routing criterion associated with a corresponding stored telephone number.

4. Apparatus as claimed in claim 3, wherein said storage means is arranged such that the routing criteria stored therein may be remotely updated.

5. Apparatus as claimed in claim 3, wherein said routing means compares a predefined section of a telephone number generated by said first telecommunications device with a corresponding section of said stored telephone numbers in said storage means.

6. Apparatus as claimed in any of claims 2-5, wherein said telephone number is communicated using dual tone multi frequency signals whereby the dual tone multi frequency signal is not communicated during a defined period of time between consecutively received telephone number digits.

7. Apparatus as claimed in claim 6, wherein said routing means is arranged to route the telecommunications traffic in the defined time period between consecutively received telephone number digits.

8. Apparatus as claimed in either of claim 6 or 7, wherein said defined time period is 50mS.

9. Apparatus as claimed in any preceding claim, further comprising an exchange loop arranged to couple to said wired output interface when said routing means routes said telecommunications traffic from said source telecommunications device to said receiver telecommunications device via said mobile line telecommunications network.

10. Apparatus as claimed in claim 9, wherein said exchange loop prevents the fixed line network from accessing said source telecommunications when said exchange loop is coupled to said wired output interface.

11. Apparatus as claimed in any preceding claim, wherein the wireless interface means further includes a GSM module.

12. Apparatus as claimed in any preceding claim wherein said wireless output interface is further coupled to a reception strength meter, whereby said reception strength meter is arranged to indicate the strength of the local mobile line network signal.

13. A system for routing telecommunications traffic between a first telecommunications device and a second telecommunications device using either a fixed line telecommunications network or a mobile line telecommunications network, comprising:
the routing apparatus as claimed in any preceding claim coupled to said first telecommunications device.

14. A system as claimed in claim 13, wherein said first telecommunications device includes a public branch exchange (PBX).

15. A system as claimed in claim 14, wherein further connected to said PBX is a plurality of telecommunications terminals.

16. A system as claimed in any of claims 13, 14 or 15, whereby said apparatus as claimed in any of claims 1 - 12 is coupled to at least one fixed line network and at least one mobile line network.

17. A method for routing telecommunications traffic between a source telecommunications device and a receiver telecommunications device via a routing means, the method comprising the steps of:
coupling a wired output interface of the routing means to a fixed line telecommunications network;
coupling a wireless output interface of the routing means to a mobile line telecommunications network;
coupling an input interface of the routing means to said first telecommunications device; and
routing the telecommunications traffic which arrives at the routing means via said input interface from said source telecommunications device to the said receiver telecommunications device via one of said fixed line telecommunications network and said mobile line telecommunications network in accordance with a predefined criterion.

18. A method as claimed in claim 17, wherein said source telecommunications device communicates with said receiving telecommunications device using a unique telephone number.

19. A method as claimed in claim 17 further comprising the step of arranging a storage means to be in communication with said routing means, the storage means storing at least a part of a plurality of telephone numbers, and providing a look up table indicating the routing criterion associated with a corresponding stored telephone number.

20. A method as claimed in claim 19, further comprising the step of remotely updating the routing criteria stored in the storage means.

21. A method as claimed in claim 19, whereby said routing means compares a predefined section of a telephone number generated by said first telecommunications device with a corresponding section of said stored telephone numbers in said storage means.

22. A method as claimed in any of claims 18-21, further communicating said telephone number using dual tone multi frequency signals whereby the dual tone multi frequency signal is not communicated during a defined period of time between consecutively received telephone number digits.

23. A method as claimed in claim 22, wherein said telecommunications traffic is routed in the defined time period between consecutively received telephone number digits.

24. A method as claimed in either of claim 22 or 23, wherein said defined time period is 50mS.

25. A method as claimed in any of claims 17 to 24, further comprising the step of coupling an exchange loop to said wired output interface when said routing means routes said telecommunications traffic from said source telecommunications device to said receiver telecommunications device via said mobile line telecommunications network.

26. A method as claimed in claim 25, further comprising the step of preventing the fixed line network from accessing said source telecommunications when said exchange loop is coupled to said wired output interface.

27. A method as claimed in any of claims 17 - 26, wherein the wireless interface means further includes a GSM module.

28. A method as claimed in any of claims 17 to 27 further coupling said wireless output interface to a reception strength meter, whereby said reception strength meter is arranged to indicate the strength of the local mobile line network signal.
